# EUROPEAN PATENT APPLICATION

(11) **EP 2 595 037 A1**
(43) Date of publication of application: **22.05.2013**
(21) Application number: 11806835.2
(22) Date of filing: 13.07.2011
(51) Int. Cl.: G06F 3/042, G06F 3/048

(54) **PROGRAM, INFORMATION PROCESSING DEVICE, INFORMATION PROCESSING SYSTEM**

(30) Priority: 13.07.2010 JP 2010159137
(71) Applicant: Yoshida, Kenji, Bunkyo-ku Tokyo 112-0002 (JP)
(72) Inventor: Yoshida, Kenji, Bunkyo-ku Tokyo 112-0002 (JP)
(74) Representative: Klunker . Schmitt-Nilson . Hirsch
(86) International application number: PCT/JP2011/066019
(87) International publication number: WO 2012/008505

(57) **Abstract**

Provided is a highly useful information processing device reducing the number of user operations, and enabling intuitive restore operations by storing an execution environment of a personal computer when a capture is made, and associating the captured execution environment, a dot pattern, and the screen shot. A program that is executed in an information processing device. The program causes a control unit of the information processing device to execute the steps of: storing an image that is displayed on a display unit connected with the information processing device in a storage unit of the information processing device, as well as, storing an execution environment of the information processing device at a moment of storing the image, in the storage unit; superimposedly forming a dot pattern and the image; acquiring the code value and coordinate values from an optical reading unit that read the dot pattern; and restoring the execution environment corresponding to the code value and coordinate values by identifying the execution environment based on the identification information that is defined in at least part of the acquired code value.

## Description

### Technical Field

The present invention relates to a program that is executed in an information processing device, the information processing device that executes the program, and an information processing system that is realized by the information processing device, a display unit, and an optical reading unit.

### Background Art

The inventor has proposed in Unexamined Japanese Patent Application Publication No. 2008-152745 to create a paper keyboard by superimposing and printing a screen shot of the desktop screen of an information processing device and a dot pattern. The print medium can be utilized as a touch panel for the information processing device by reading the dot pattern printed on the paper keyboard using an optical reading unit (Paragraph 0327 and the like).

Moreover, as in "Files and Settings Transfer Wizard (http://support.microsoft.com/kb/293118/ja; 'How to use the "Files and Settings Transfer Wizard" in Windows XP (registered trademark)')"and "Backup or Restore Wizard (http://support.microsoft.com/kb/882790/ja;'Backing up important files and folders')"that are mounted in Windows XP (registered trademark), the operating system sold by Microsoft Corporation, there has been proposed a technique in which, by backing up the settings of an information processing device in advance, when you need to set up a new information processing device for replacing a crashed information processing device or other reasons, the new information processing device is set up with the settings of the former information processing device as is by restoring the backed-up settings without manually setting up.

### Disclosure of the Invention

### Problem to be Solved by the Invention

However, with the technique described in Unexamined Japanese Patent Application Publication No. 2008-152745, the formation of the captured desktop (such as the arrangement of icons) is often different between the time when the paper keyboard is printed and the time when the paper keyboard is operated, which confuses many users whether to operate the personal computer according to the formation of the paper keyboard or the one of the present desktop, disturbing comfortable operations.

Also, when executing a desired information processing function (such as the back-up function described in
http://support.microsoft.com/kb/882790/ja;'Backing up important files and folders'), users are generally required to carry out the steps of starting up software that is stored in the storage device and performing a plurality of operations to the software. Such operations are very much complicated tasks for users not familiar to personal computers.

The present invention is devised in consideration of the above points. The invention has a technical objective of realizing a highly useful information processing device that reduces the number of user operations, and enables intuitive restore operations by storing an execution environment of a personal computer when a capture is made, and associating the execution environment, a dot pattern, and a screen shot.

### Means for Solving the Problem

The present invention employed the following means to solve the above problems.

(1) The program of the present invention is executed in an information processing device, and causes a control unit of the information processing device to execute steps of: storing an image that is displayed on a display unit connected with the information processing device in a storage unit of the information processing device, as well as, storing an execution environment of the information processing device at a moment of storing the image, in the storage unit; forming superimposedly a dot pattern, that defines a code value that at least includes identification information identifying the execution environment and coordinate values corresponding to the image, and the image; acquiring the code value and coordinate values from an optical reading unit that read the dot pattern and is connected with the information processing device; and restoring the execution environment corresponding to the code value and coordinate values by identifying the execution environment based on the identification information that is defined in at least part of the acquired code value.

(2) Further, the image displayed on the display unit is one or a plurality of software execution images that can accept a pointing operation, the execution environment includes an execution state of the software, and the restoring step is a step that replaces an image displayed on the display unit at a moment when the optical reading unit read the dot pattern and restores the execution environment based on the acquired identification information as the software execution image corresponding to the code value and the coordinate values.

(3) Further, the image displayed on the display unit is a desktop image, the execution environment includes arrangement information of an icon on the desktop image, and the restoring step is a step that replaces an icon arrangement of a desktop displayed on the display unit at a moment when the optical reading unit read the dot pattern and restores the execution environment based on the acquired identification information by making the icon arrangement same as an icon arrangement of the desktop image corresponding to the code value and the coordinate values.

(4) Further, the image display screen of the display unit can be written in, the storing step further includes a step of storing writing image data that is obtained by recognizing a writing operation to the image display screen by a recognition unit that is further provided in the information processing device, in the storage unit, the forming step is a step that forms the writing image by superimposing the dot pattern, that defines the code value and coordinate values, and the image, and the restoring step is a step that restores the execution environment based on the acquired identification information, and displays the writing image data corresponding to the code value and coordinate values on the display unit.

(5) Further, a dot pattern that defines coordinate values is formed on the image display screen, and the recognition unit recognizes a writing operation to the image display screen by the optical reading unit as the writing image data, based on the coordinate values defined by the dot pattern read by the optical reading unit.

(6) Further, the image displayed on the display unit is a desktop image, the code value includes association with an icon on the desktop image, the execution environment includes execution information of a program corresponding to an icon on the desktop image, and the restoring step is a step that restores the execution environment based on the acquired identification information, and executes a program corresponding to the icon corresponding to the code value defined by the dot pattern.

(7) Further, the execution environment further includes execution information of a program corresponding to an icon on a desktop image, and the restoring step, in addition to the step of making the same arrangement, further includes steps of: restoring the execution environment based on the acquired identification information; converting coordinate values defined by the dot pattern to coordinate values on the display unit; moving a cursor displayed on the display unit to a location of the coordinate values on the display unit; and executing a program corresponding to an icon located at the coordinate values of the moved cursor.

(8) Further, the image displayed on the display unit is an execution image of software that accepts input, the execution environment includes an execution state of the software and hierarchical information that is input by a user until reaching the execution state, and the restoring step is a step that restores the execution environment based on the acquired identification information, converts coordinate values defined by the dot pattern to coordinate values of the display unit, and executes software located at the coordinate values on the display unit based on the hierarchical information corresponding to the code value.

(9) Further, the forming step is a step that superimposedly prints a dot pattern that defines the code value and coordinate values and the image on a medium.

(10) The information processing device of the invention can restore a former state from an execution environment and allow a user to utilize a former operation, in which the information processing device at least has a storage unit and a control unit, and the control unit: stores an image that is displayed on a display unit connected with the information processing device in the storage unit, as well as, stores the execution environment of the information processing device at a moment of storing the image, in the storage unit; superimposedly forms a dot pattern, that defines a code value that at least includes identification information for identifying the execution environment and coordinate values corresponding to the image, and the image; acquires the code value and coordinate values from the optical reading unit that read the dot pattern and is connected with the information processing device; identifies the execution environment based on the identification information defined in at least part of the acquired code value; and restores the execution environment corresponding to the code value and coordinate values.

(11) The information processing system of the invention comprises: an information processing device that can restore a former state from an execution environment and allow a user to utilize a former operation; and a display unit and an optical reading unit that are connected with the information processing device, in which the information processing device at least has a storage unit and a control unit; and the control unit: stores an image displayed on the display unit in the storage unit, as well as, stores the execution environment of the information processing device at a moment of storing the image, in the storage unit; superimposedly forms a dot pattern, that defines a code value that at least includes identification information for identifying the execution environment and coordinate values corresponding to the image, and the image; acquires the code value and coordinate values from the optical reading unit that read the dot pattern; identifies the execution environment based on the identification information defined in at least part of the acquired code value; and restores the execution environment corresponding to the code value and coordinate values.

(12) Further, the control unit further includes processing of: at least temporarily displaying calibration marks at two or more corners and/or a center of the display unit; when the optical reading unit reads a location that matches the calibration mark on a medium on which the dot pattern that defines the code value and coordinate values and the image are superimposedly formed, converting coordinate values defined by the dot pattern at the read location to coordinate values of a location where the calibration mark on the display unit is displayed; by performing this processing to all the calibration marks displayed on the display unit, acquiring a coordinate conversion function or a coordinate conversion table that converts coordinate values of the dot pattern to coordinate values of the display unit; and, afterwards, restoring the corresponding execution environment by converting coordinate values of the dot pattern read by the optical reading unit to coordinate values on the display unit using the coordinate conversion function or coordinate conversion table.

(13) Further, the display unit comprises a projector and a projection board, a dot pattern that defines a code value and coordinate values is formed on the projection board, the dot pattern that defines the code value and coordinate values and the image are superimposedly formed by projecting the image on the projection board, and the control unit identifies the projection board based on the code value.

(14) Further, the projection board is a white board.

(15) Further, the projection board is a flip chart.

(16) Further, the dot pattern is formed by arranging a plurality of stream dot patterns arrayed in accordance with steps of: disposing a plurality of reference dots sequentially in a line in accordance with a predetermined rule; providing a first virtual reference line that comprises a straight line, a polygonal line and/or a curved line that connects the plurality of reference dots; providing at least one second virtual reference line that is defined at a predetermined position from the reference dots and/or the first virtual reference line and comprises a straight line and/or a curved line; providing a plurality of virtual reference points at predetermined positions on the second virtual reference line; and disposing an information dot that defines X and Y coordinate values and/or a code value by a distance and a direction from the virtual reference point, at an end point of a vector expressed with the virtual reference point as a start point.

According to this, as a plurality of stream dot patterns with certain intervals between reference points are arrayed and formed, X and Y coordinate values are tightly defined on the projection board, whereby trajectory information can be generated. Further, when a text, a staff notation, a map, a figure, and the like are printed on the projection board, and an operation is performed by tracing or touching on the line segments with the scanner pen, dot patterns can be effectively arranged by forming the stream dot patterns only along the line segments. Also, without being restricted to the shape of a rectangular area when forming the dot patterns that define X and Y coordinates as two-dimensional codes (using as an index), dot patterns in which a set of certain information is cyclically defined can be formed in a flexible shape tailored to an information area that is visibly formed on a medium surface.

(17) Further, in the stream dot, a reference dot is further provided at a predetermined position, which is a further reference for defining the second virtual reference line and/or defining a direction of the dot pattern and a set of X and Y coordinate values and/or a code value.

According to this, by providing a new reference point, the direction of a stream dot pattern and a set of certain information can be easily defined without using an information dot, suppressing ineffective decrease of information. Further, the position of a virtual reference point as a starting point of an information dot can be accurately indicated by arranging the new reference point.

### Effects of the Invention

As described above, the present invention records the execution environment of a personal computer when a capture is made, and associates the execution environment with the dot pattern and the screen shot, thereby realizing a highly useful information processing technique that decreases the number of user operations and enables intuitive restore operations.

### Brief Description of the Drawings

FIG. 1 is a block diagram schematically showing a configuration of the information processing system of the invention.
FIG. 2 is a flowchart of information processing executed by the information processing system of FIG. 1.
FIGS. 3A and 3B are diagrams illustrating an embodiment of the information processing system of the invention.
FIGS. 4A and 4B are diagrams illustrating an embodiment of the information processing system of the invention.
FIGS. 5A to 5D are diagrams showing examples of screen shots.
FIGS. 6A and 6B are diagrams illustrating tables that indicate correspondence between code values and execution programs.
FIGS. 7A and 7B are diagrams illustrating a method of defining an execution program and hierarchical information.
FIG. 8 is a diagram illustrating a method of calibration.
FIGS. 9A and 9B are diagrams illustrating an embodiment of the information processing system of the invention.
FIGS. 10A and 10B are diagrams illustrating an embodiment of the information processing system of the invention.
FIGS. 11A to 11C are diagrams showing examples of the dot patterns.
FIGS. 12A and 12B are diagrams showing examples of information dots and bit expression of data defined therein.
FIGS. 13A and 13B are diagrams showing relationships between code values of dot patterns and X and Y coordinate values thereof.
FIGS. 14A to 14C sequentially show an example of processes for forming a dot pattern.
FIGS. 15A and 15B sequentially show an example of processes for forming a dot pattern.
FIG. 16 is a diagram showing an example of providing the first virtual reference line as a Bezier curve.
FIGS. 17A and 17B are diagrams showing an example in which stream dot patterns are arranged in an up-to-down direction.
FIG. 18 is a diagram schematically showing an example of the configuration of the pen type scanner.

### Mode for Carrying Out the Invention

The following will elaborate the embodiments of the present invention with reference to the drawings.

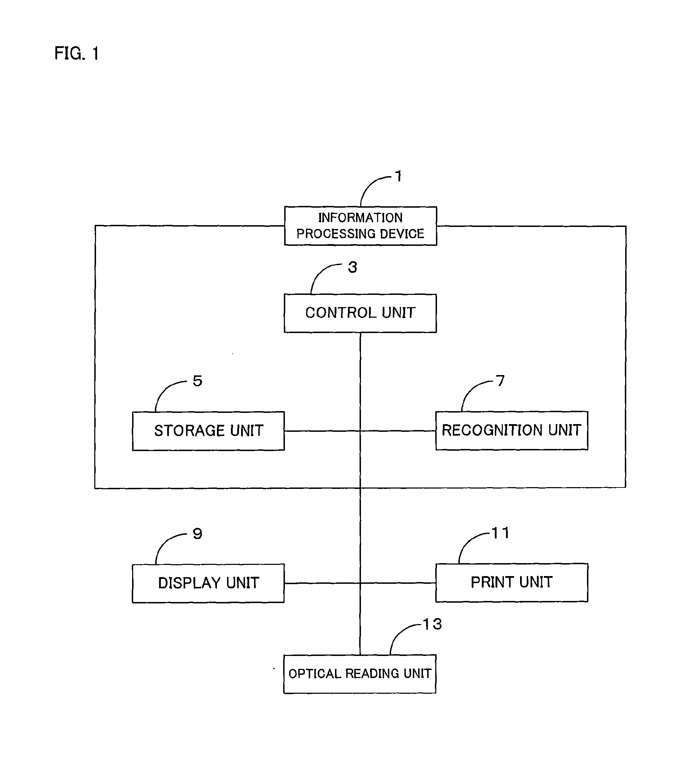

FIG. 1 is a block diagram schematically showing a configuration of the information processing system of the invention.

The information processing system of FIG. 1 is configured by an information processing device 1, a display unit 9, a print unit 11, and an optical reading unit 13; and the information processing device 1 comprises a control unit 3, a storage unit 5, and a recognition unit 7.

The display unit 9 is connected with the information processing device 1 and displays desktop images and execution images of applications. The storage unit 3 stores the images displayed on the display unit 9 and the execution environment of the information processing device 1. The recognition unit 7 recognizes a writing operation by a user as writing image data when the image display screen of the display unit 9 is writable. This writing image data is also stored in the storage unit 3. The print unit 11 and the optical reading unit 13 are connected with the information processing device 1 in the same way as the display unit 9. As a connection method, there can be considered a wired connection through a USB port, as well as a wireless communication, such as infrared communication, optical communication, BLUETOOTH (registered trademark), ZigBee, and weak radio waves. The print unit 11 superimposes and prints an image stored in the storage unit 3 and a dot pattern that defines a code value and/or coordinate values. The optical reading unit 13 reads out the dot pattern from a medium printed by the print unit 11 as image data. The read image data is converted back to the code value and/or coordinate values.

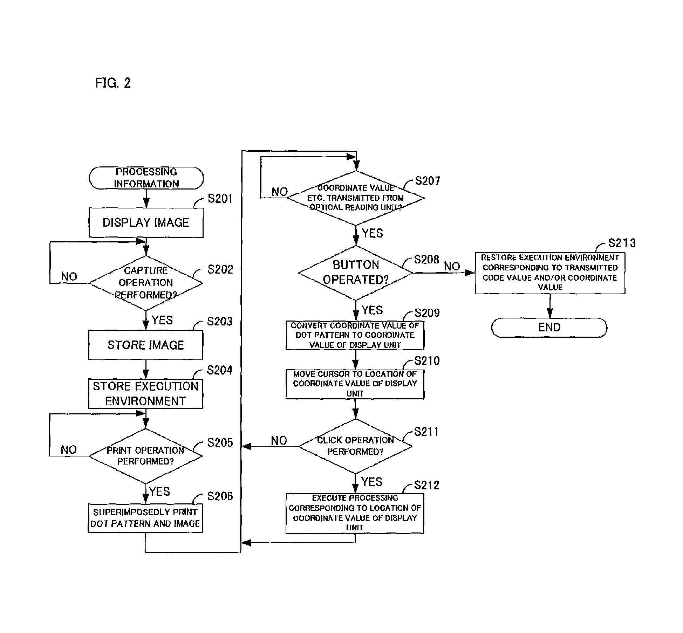

FIG. 2 is a flowchart of information processing executed by the information processing system of FIG. 1.

In FIG. 2, first, the control unit 3 displays an image on the display unit 9 in response to a user operation (for example, starting up the information processing device 1 and browsing WEB) (Step S201). As for the image, in addition to those described above, there can be considered a FLASH, a text/drawing, a WEB page, a variety of settings, a file/folder, and an image relating to the execution environment.

Next, the control unit 3 determines whether there was a capture operation by a user (StepS202). The capture operation includes, in addition to pressing of a "Print Screen" button on the keyboard connected with the information processing device 1, double-clicking of an icon for executing a program of the invention, an operation of other buttons on the keyboard, an operation of a button provided on a pen type scanner that comprises the optical reading unit 13, and reading of the paper keyboard on which dot codes and a variety of icons are superimposed and printed.

As the result of determination at step S202, when a capture operation is performed, the control unit 3 stores the image that was displayed on the display unit 9 at the moment when the capture operation is performed, in the storage unit 5 (Step S203). Also, the control unit 3 stores the execution environment of the information processing device 1 at the moment when the image is stored, in the storage unit 5 (Step S204). The execution environment refers to the operation environment of the information processing device 1, the contents and the start-up/control/execution states of programs, the contents and execution states of applications, the arrangement information of icons, the browsing states of WEB pages, the open/closed states of files, and the like.

It should be noted that, while the details will be described later herein, the execution environment includes a variety of hierarchical information, and can define the information using a code value. In this way, a user can go to the hierarchy where the processing flow is recognized by reading the dot pattern once without performing a plurality of operations from the desktop screen.

Next, the control unit 3 determines whether a print operation was performed by a user or not (Step S205). The print operation may be performed by reading the paper keyboard, in addition to a mouse operation and a keyboard input. Texts, figures, and the like that indicate printing to the user are superimposedly printed with dot patterns on the paper keyboard. By reading the texts, figures, and the like with the pen type scanner, the print operation can be carried out with improved convenience and understandability due to the coordinate values and code values defined by the dot patterns that are superimposedly formed with the texts, figures, and the like. In this case, the coordinate values and code values defined by the dot patterns at the relevant location are associated with an operation instruction for starting printing and registered in a link table.

If there is a print operation as the result of determination of step S205, the control unit 3 superimposes the image that is stored in the storage unit 5 at step S203 and dot patterns that define code values and/or coordinate values, and prints the image and the dot pattern by the print unit 11 (Step S206).

Concurrently, the control unit 3 recognizes where the icon, application, and WEB page are located on the image that is stored in the storage unit 5 at step S203, and calculates the coordinate values of the location where the icon, application, and WEB page are displayed. Then, the control unit 3 relates the X and Y coordinates of the image to the XY coordinates of the print medium, and generates dot patterns corresponding to the displayed image.

It should be noted that, at step S206, dot patterns that define different code values for respective icons and windows shown on the image are preferably superimposed and printed.

In this way, calibration, that will be described later herein, is not required, as icons and windows can be directly defined by the code values without using coordinate values.

Next, the control unit 3 determines whether the optical reading unit 13 read the print medium that was formed at step S206 and whether coordinate values or code values and coordinate values that are defined by the dot patterns were transmitted or not (Step S207).

As the result of determination at step S207, if coordinate values or code values and coordinate values were transmitted, then, the control unit 3 determines whether a button was operated by a user (step S208). While the button operation refers to an operation of a button provided on the pen type scanner (such as pressing, sliding, long-pressing, double-pressing), added to this, processing may also be performed without determining whether a button operation was performed (step S208) by changing modes before reading the paper keyboard or reading the dot pattern.

As the result of determination at step S208, if a button operation was performed, the control unit 3 converts the coordinate values of the dot pattern to the coordinate values of the display unit 9 (Step S209).

Here, the conversion is preferably performed by storing correspondence between the X and Y coordinates of the image and the X and Y coordinates of the print medium when calculating the coordinate values at the above step S206 and using the formula that is used for associating the coordinate values.

Next, the control unit 3 moves the cursor display on the display unit 9 to the location of the converted coordinate values of the display unit 9 (Step S210).

Next, the control unit 3 determines whether a click operation was performed by a user or not (step S211). The click operation may be pressing of a button provided on the pen type scanner, reading of a click icon formed on the paper keyboard, and other operations.

As the result of determination at step S211, if a click operation was performed, the program of the icon located at the cursor displayed on the display unit 9 starts up, or other operations are performed (Step S212). If the icon located at the cursor is a WEB browser, the browser starts up. After starting up the browser, processing of step S207 and thereafter is repeated again.

As the result of determination at step S208, if there was no button operation, the control unit 3 restores the execution environment corresponding to the transmitted code value and/or coordinate values (Step S213). For example, if the first code value is transmitted, the desktop environment of the information processing device 1 is restored to the desktop environment of, for example, steps S202 to S204. As the information processing device 1 can immediately restore the environment printed on the print medium by touching the print medium using the pen type scanner, the user can easily perform operation of the personal computer under the former environment. If the image printed on the print medium corresponds to the image displayed on the display unit 9, pointing operations using coordinate values and execution of a variety of software by the second code value become possible.

Also, for example, if a window in a process of making a document is printed on the print medium at a location read by the optical reading unit 13, the control unit 3 displays the document on the display unit 9 based on the execution environment stored at step S204. Even if the document is deleted somewhere between steps S204 to S213, the document can be displayed on the display unit 9 as the execution environment of the information processing device 1 is stored at step S204.

If basic software of the document is deleted, the document cannot be retrieved. In such a case, the window for the document is preferably displayed in lighter color, or a message of caution is preferably displayed. Also, if there is data that saves the same content as the deleted file in different extension (WORD ⇔ PDF), the data can be searched by the file name and displayed. Also, the latest version of the document can be displayed by operations of a variety of buttons.

Also, for example, if dot patterns that define different code values for respective icons and windows shown on the image are superimposedly printed at step S206 (which means, not only a code value that identifies the whole image but also the codes that identify icons and windows on the whole image are defined), the code value that identifies the whole image identifies the image and execution environment corresponding to the print medium among a number of screen shots as well as an icon in the image. Thus, without a need to restore the desktop environment of the information processing device 1 to the desktop environment of, for example, steps S202 to S204 and identify icons and windows by pointing the coordinate values as described above, the document can be directly opened and the file can be directly referred to under the former execution environment.

The processing ends when the execution environment is restored at step S213.

After ending the processing, processing may return to step S207. For example, when repeatedly restoring the execution environment based on the same print medium, steps S201 to S206 are not required to be performed for each restoration, whereby usability is expected to be improved. Alternatively, step S213 may be repeatedly performed. Moreover, processing of steps S209 to S212 may be performed in the execution environment restored at S213.

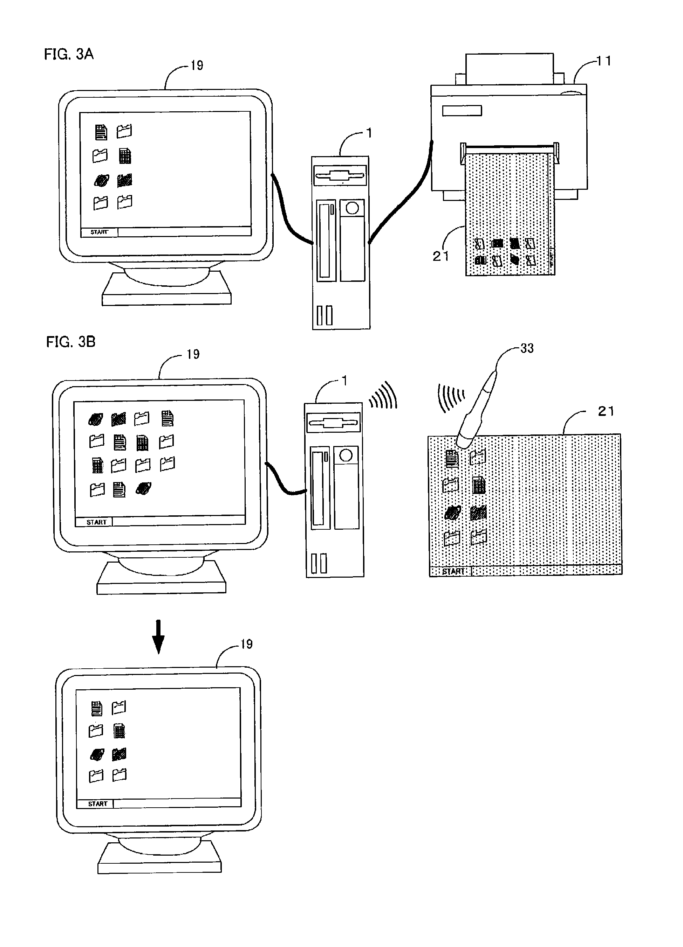

In FIG. 3A, the liquid crystal display 19 as a display unit displays a desktop image that is displayed as the result of starting up the OS by the control unit 3 of the information processing device 1. The desktop image shows a start button and a variety of icons (for opening/creating a document, and executing a program such as a WEB browser).

The information processing device 1 is connected with a print unit 11 (a printer) via a USB port, and, thus, the print unit 11 can print not only normal printing but also, for example, dot patterns using a stealth ink.

The dots of the dot patterns are preferably printed with a stealth ink (invisible ink) or a carbon ink that absorbs infrared light, while a non-carbon ink that reflects or transmits infrared light is preferably used for printing normal graphics and texts.

Only by adding a process of printing dots in the normal printing processes, nearly all printers, ranging from offset printers to ink-jet printers, can be used for printing without a special print technique.

The dot pattern comprises extremely small dots with the diameter of 0.04 mm (approximately 0.05 mm when ink-jet printers are used) and is less visible. If a colorless and transparent stealth ink that absorbs infrared light and is developed for high-quality output is used, the dots can be completely invisible.

Also, if the ink and the print processes are not desired to be changed (four color print), K (carbon black) of CMYK is used for printing dots. In such a case, CMY may be used for CAD (Computer-Aided Design) drawings, texts, symbols, figures, maps, photographs, and graphics, and K may be used for printing dots thereover. Black is expressed by composite black by mixing only CMY. However, as complete black cannot be reproduced, the black is not accentuated and the picture may become unsatisfactory. Also, since K is used for printing dots, the area printed with dots look like halftone dots and the picture becomes dusty. To resolve this, dots may be printed in only a minimum area, and CMYK may be used as is conventionally done in the area where dots are not printed, provided, however, the scanner can only touch the limited area where the dots are printed.

Also, as the ink used reacts in the infrared range and the ink cannot be copied, the security can be maintained at a high level. As for print mediums, any kind of paper can be used for printing dots, such as art paper, mat paper, quality paper, standard paper, newspaper, photographic paper, and copier paper, as well as any medium other than paper as long as the medium is inelastic.

FIG. 3A shows a schematic image of processing of steps S201 to S206 of FIG. 2. The image displayed on the liquid crystal display 19 is captured, the screen shot is stored with the execution environment of the information processing device 1 when a capture operation is performed in the storage unit 5, and, when a print operation is performed by a user, the print unit 11 creates a print medium 21. It will be appreciated that steps S202 to S206 of FIG. 2 may be automatically performed when the capture operation is performed without determining if a print operation is performed. As described above, the print medium 21 is superimposedly printed with the screen shot and the dot patterns.

Here, a control unit that is further provided on the print unit 11, may also print dot patterns that define different code values for respective icons. By defining respective icons using code values, a user can execute a program without defining coordinate values in dot patterns. Also, the coordinate values of the dot patterns and the coordinate values on the display unit do not have to be related, thereby improving the processing speed.

FIG. 3B schematically shows an information processing method that uses the print medium 21 created in FIG. 3A, and the image corresponds to processing of steps S207, S208, and S213 of FIG. 2.

The information processing device 1 is connected with the pen type scanner 33 that comprises at least the optical reading unit 13 by means of a wireless communication using, for example, a BLUETOOTH (registered trademark).

When a user reads the print medium 21 by the pen type scanner 33, the pen type scanner 33 reads out only the dots, printed with an infrared absorbing ink, of the touched portion, and converts the dots into code values and/or coordinate values. The converted code values and/or coordinate values are transmitted to the information processing device 1 by a wireless communication.

The liquid crystal display 19 displays the image that is displayed in FIG. 3A, that is, a desktop image with different icon arrangement from the image printed on the print medium 21 is displayed. Thus, the execution environment is different from the time of the capture operation. For this reason, the control unit 3 preferably switches, by a predetermined operation, such as, whether to completely restore the execution environment at the time of the capture operation, and whether to execute the program of the touched icon in the execution environment at the time of the capture operation or in the present execution environment, or inform to the user that the document at the touched portion is unusable as the document is deleted or display the latest version of the document.

For example, the switching may be considered to be performed by a method of operating a button that is further provided on the pen type scanner 33 (for example, touching the print medium 21 while half-pressing, long-pressing, or double-pressing the button), or assigning respective functions to a plurality of buttons (providing a restore button and the like). It will be appreciated that the modes may be switched by touching a paper keyboard to which clear descriptions and graphics are added. Such a paper keyboard may be printed on the print medium 21.

In the illustration of FIG. 3B, processing of restoring the execution environment at the time of a capture operation, is performed. That is, processing that makes the icon arrangement displayed on the liquid crystal display 19 the same as the icon arrangement on the print medium 21 is performed. If a program corresponding to an icon on the print medium 21 does not exist in the present information processing device 1, only the existing icons are preferably arranged in the icon arrangement of the print medium. After restoring the execution environment, the user performs personal computer operation centering on the processing of steps S209 to S212 of FIG. 2 (a mouse mode). It will be appreciated that, if the coordinate values are defined on the print medium 21, the pen type scanner 33 may be used to function as a pointing device, without restoring the execution environment. Since pointing is performed in relationships between the coordinate values on the print medium 21 and the coordinate values on the liquid crystal display 19, not in a relative movement as with a general mouse, the user can perform intuitive pointing operations with absolute values. It should be noted that, in this case, a mouse button is preferably provided on the pen type scanner 33 to switch between the mouse mode and the restore mode (executing step S213 of FIG. 2).

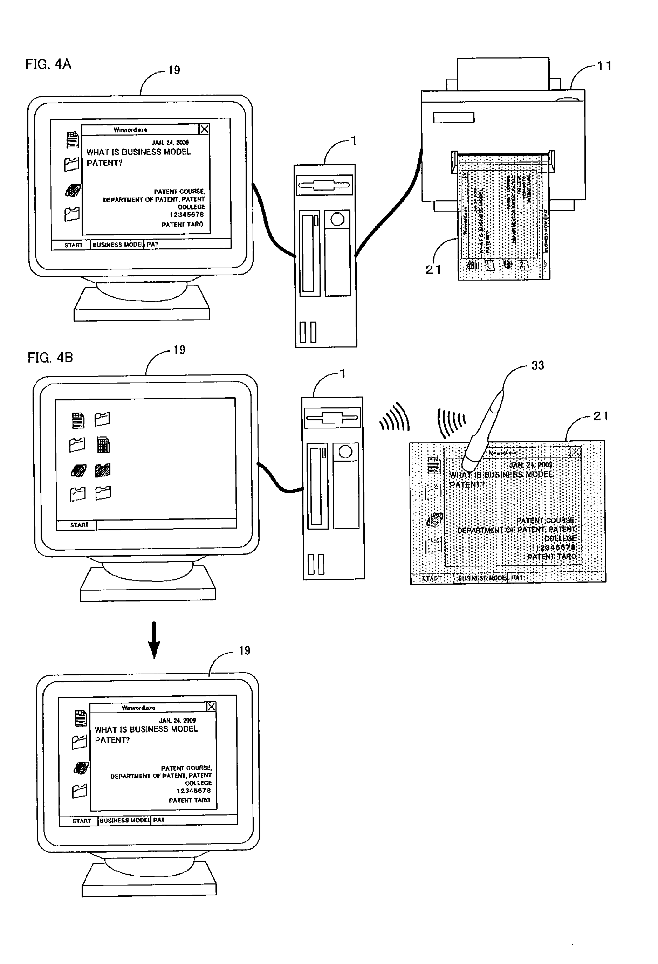

FIG. 4A is a diagram that schematically shows an image of processing of steps S201 to S206 of FIG. 2. FIG. 4B is a diagram that schematically shows an image of processing of steps S207, S208, and S213 of FIG. 2. As the configuration is basically the same as FIGS. 3A and 3B, the overlapping descriptions are omitted for the same components, and only the portion different from FIGS. 3A and 3B will be described below.

In FIGS. 4A and 4B, the desktop image displayed on the liquid crystal display 19 shows a plurality of icons and a window in process of creating a Word file titled as "What is Business Method Patent?" If the print medium 21 is created by capturing the desktop image (illustration of FIG. 4A), and the window in process of creating a Word file on the print medium 21 is touched by the pen type scanner 33, the window is displayed on the liquid crystal display 19 (illustration of FIG. 4B). It should be noted that the above-described predetermined operation (touching while pressing the button) can switch whether to display the latest version or the version at the time of the capture operation.

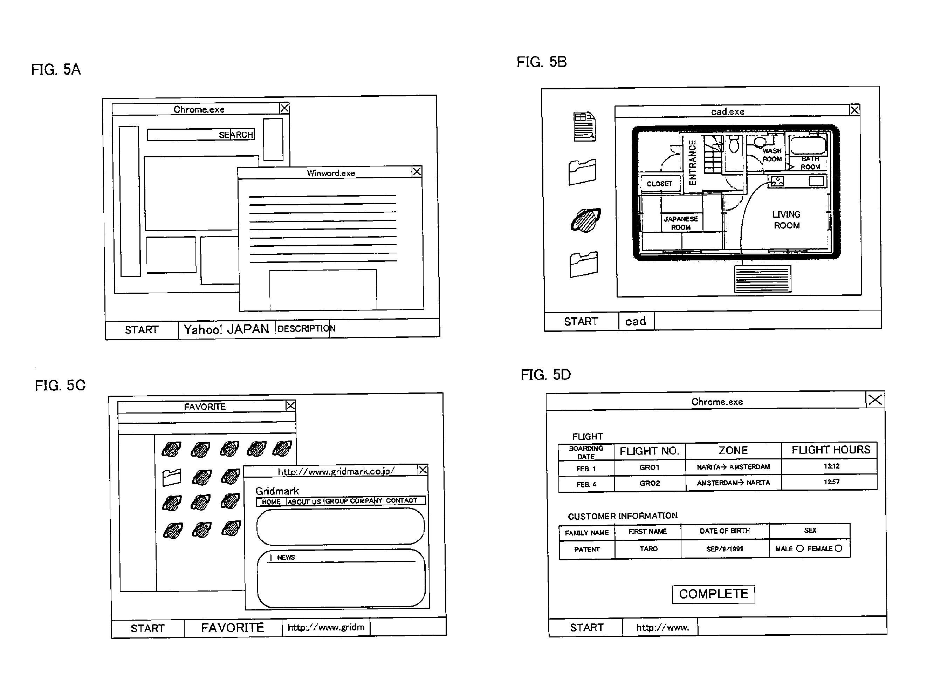

FIGS. 5A to 5D are diagrams showing examples of images that are displayed on the display unit, that is, examples of screen shots. FIG. 5A shows a browser window and a word processor window. FIG. 5B shows a variety of icons and a window in process of executing CAD. Also, FIG. 5C shows a folder window of a folder name "Favorite" and a window that displays a web site of "Gridmark," and FIG. 5D shows a reservation screen of an air ticket on the whole screen.

In the case of the image for executing software (for example, a browser) that accepts inputs, such as a screen for reserving airline tickets as shown in the illustration of FIG. 5D, information that has been input until reaching the image is important. For this reason, it is necessary to store the processes until getting the image rather than directly identifying the image (the screen), in order to reach the image. Thus, the code value preferably defines hierarchical information for retaining the paths taken to reach the present image as data. If a process flow is not particularly required, such as a screen for displaying a general search result of WEB, the screen can be directly restored without reflecting the hierarchical information without a problem. Moreover, when the process flow is only a single path, or the software is object-oriented, the screen can also be directly restored.

For example, if a user touches a portion where "Flight" or "Customer information" is indicated on the print medium with the pen type scanner, the image is restored on the display unit based on the hierarchical information, such as the boarding date, the first and family names, and the like that are input until reaching this image, according to the code value that is defined in the dot pattern. Next, if a radio button at the "Male" portion in the field indicating sex is touched, the coordinate values defined by the dot pattern are converted to the coordinate values on the display unit, and the input result is displayed on the display unit just like the portion was clicked with a general mouse. It will be appreciated that, when the radio button at the "Male" portion is clicked first, the screen that is displayed as the result of the touch input may be displayed on the display unit without restoring the execution environment at the time of the capture operation.

In this way, there are an endless number of combinations for the configuration of the screen shots, and the embodiments can be changed in a variety of ways within the scope of the present invention. That is, any embodiment that is obtained by combining technical means that are changed as necessary within the scope of the claims can also be included in the technical scope of the present invention.

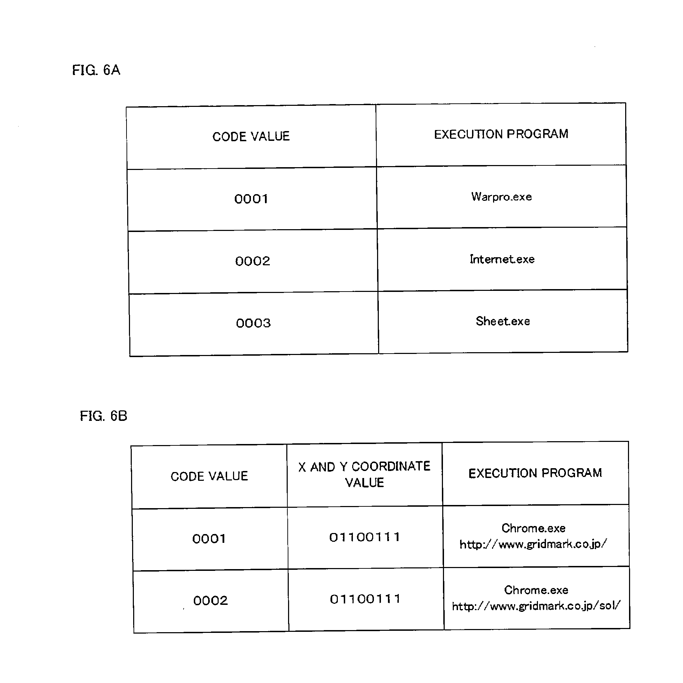

FIG. 6A is a diagram illustrating a table showing correspondences of code values and execution programs. When a dot pattern is created, a table that relates the code value of the dot pattern to an execution program indicated by the icon (the function of the icon) is created in the storage unit. For example, if a dot pattern corresponding to an icon that indicates a word processor is created and a code value 0001 is allocated, a table that relates the code value, 0001, to an execution program, Warpro.exe, is created. The same applies to icons that indicate the Internet and spreadsheet. Once such a table is created, for example, if the user clicks the picture of the graph on the print medium 21 shown in FIG. 3B by the scanner, the spreadsheet program starts up.

FIG. 6B is a diagram illustrating a table that shows correspondences of code values/coordinate values and execution programs. The execution program can be defined by the X and Y coordinate values, and the hierarchical information of the program can be defined by the code value.

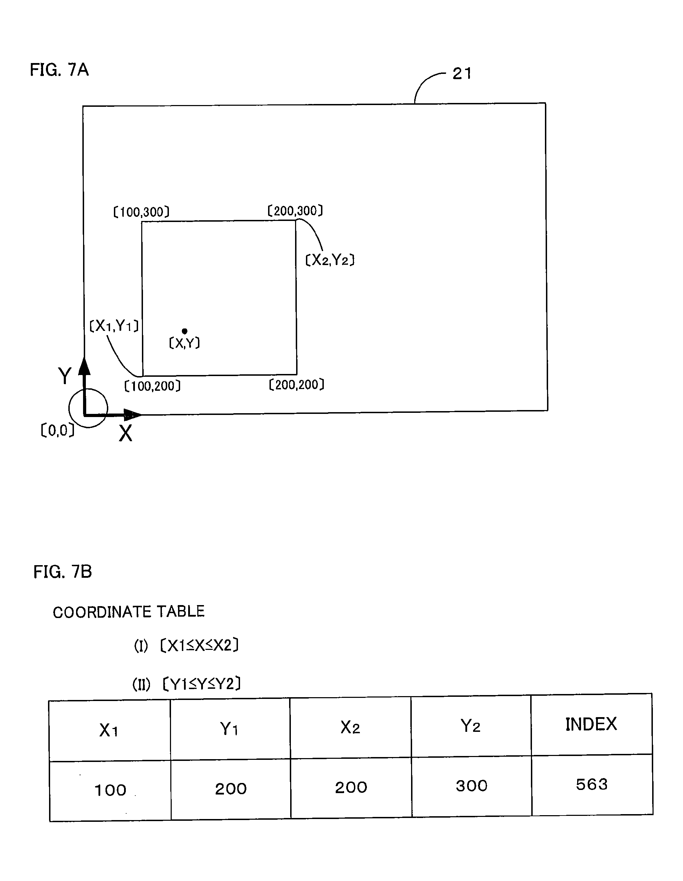

The following describes a method of defining the execution program and the hierarchical information with reference to FIGS. 7A and 7B as necessary.

First, to define the execution program using X and Y coordinate values, an index should be defined using coordinate values defined in the dot pattern on the print medium 21. FIG. 7A illustrates a method of defining an index when a user touches, with the pen type scanner, somewhere within the range of the rectangular area that is formed on the print medium 21 (an icon or a window is assumed). In FIG. 7A, the coordinates [X, Y] indicate the location touched by the pen type scanner, the coordinates [X1, Y1] indicate the minimum point of the rectangular area, and the coordinates [X2, Y2] indicate the maximum point of the rectangular area.

Here, if the coordinates [X, Y] are [125, 225], [X1 ≤ X ≤ X2] is [100 ≤ 125 ≤ 200] and [Y1 ≤ Y ≤ Y2] is [200 ≤ 225 ≤ 300], thus, the coordinates [X, Y] are found to be within the rectangular area. Therefore, the index is defined as 563, and the X and Y coordinate values can identify the execution program.

Next, a code value is used to define the hierarchical information of the program. To define hierarchical information using a code value, code values may be allocated to respective screens, such as, a screen immediately after starting up a certain program is defined as 0, a screen that stepped forward therefrom is defined as 1, and a screen to which a certain information is input is defined as 11.

In the upper row of the illustration of FIG. 6B, the execution program "Chrome.exe" is defined by X and Y coordinate values "01100111," and hierarchical information "http://www.gridmark.co.jp/" of the WEB page is defined by a code value "0001." In the lower row thereof, the code value "0002" defines "http://www.gridmark.co.jp/sol/."

It should be noted that a coordinate table that registers the minimum and maximum coordinate values is at least required to define an index within a rectangular area, and, if the shapes of the icons and windows are not rectangle, a plurality of coordinates ([X3, Y3]...) are required to be further provided as reference in the coordinate table to define the index. For this reason, a code value that can directly define the index is preferably defined in the dot pattern.

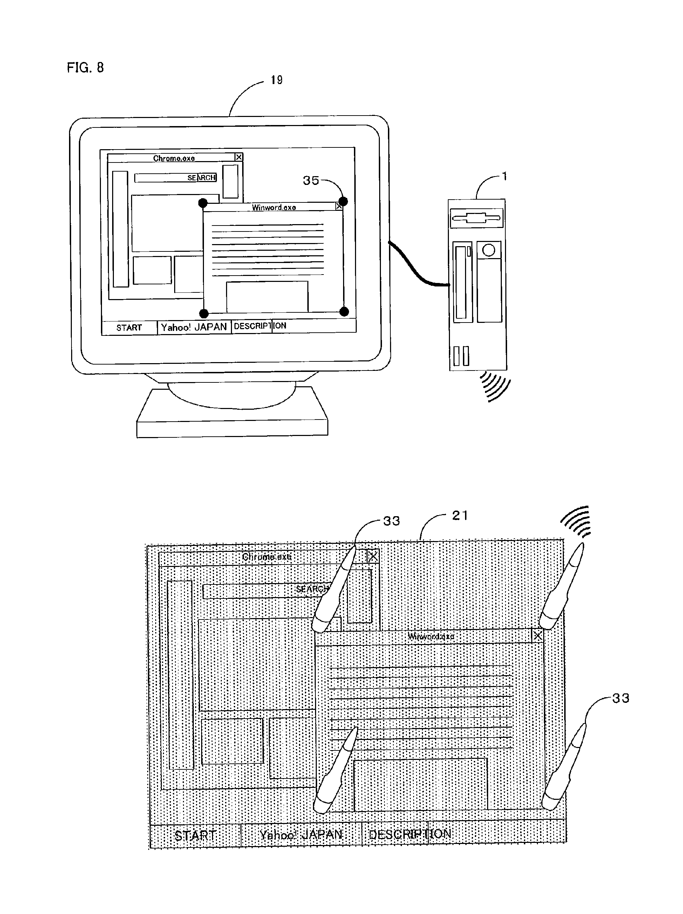

FIG. 8 is a diagram illustrating a method of performing calibration between the images displayed on the print medium 21 and the liquid display 19.

When the print unit 11 superimposedly prints the dot pattern and the captured image, while there is no problem if the print medium 21 is formed in a way in which the coordinate values that the dot pattern defines accurately corresponds to the coordinate values on the liquid crystal display 19, there are some cases in which accurate printing is not performed due to the size of the print paper or from other reasons, such as, inserting of the print paper, and the resolution of the liquid crystal display 19. Thus, the control unit 3 of the information processing device 1 needs to perform calibration on occasions such as when the user orders calibration or when only a portion where a background image is displayed is touched a plurality of times.

First, calibration marks 35 are displayed at arbitrary positions on the liquid crystal display 19 as shown in FIG. 8. To perform calibration with minimum number of touches, the calibration marks are preferably temporarily displayed at the corners and/or the center where the user can easily touch.

Next, the user touches a location that matches the calibration mark on the print medium 21 using the pen type scanner 33 as shown in FIG. 8. The dot pattern of the touched portion is read by the optical reading unit 13 inside the pen type scanner 33, and the defined coordinate values are transmitted to the information processing device 1 through a wireless communication. The control unit 3 performs processing for relating the transmitted coordinate values to the coordinate values on the image displayed on the liquid crystal display 19. The user performs this touch operation for all calibration marks. In the illustration of FIG. 8, the calibration marks are displayed at four locations, and, if the user touches all four calibration marks, the control unit 3 can acquire a coordinate conversion function or a coordinate conversion table for converting the coordinate values of the dot pattern to the coordinate values on the liquid crystal display 19.

Once the coordinate conversion function or coordinate conversion table is acquired, the coordinate values of the dot pattern that is read afterwards by the pen type scanner 33 are converted to the coordinate values on the liquid crystal display 19, and a program of an icon that is shown at the corresponding portion is executed.

At this time, if a code value (for identifying the whole screen shot) is defined in the dot pattern, it is preferable to associate the code value to the coordinate conversion function or coordinate conversion table for converting the coordinate values of the dot pattern to the coordinate values of the image displayed on the liquid crystal display 19 by calibration. It is also possible to store the coordinate conversion function or coordinate conversion table that relates the X and Y coordinates of the image to the X and Y coordinates of the print medium and that is used when creating a dot pattern corresponding to the display image in the storage unit 5 by relating with the code value at the printing stage, then, when reading the dot pattern again, retrieve the coordinate conversion function or coordinate conversion table from the code value to convert the coordinate values.

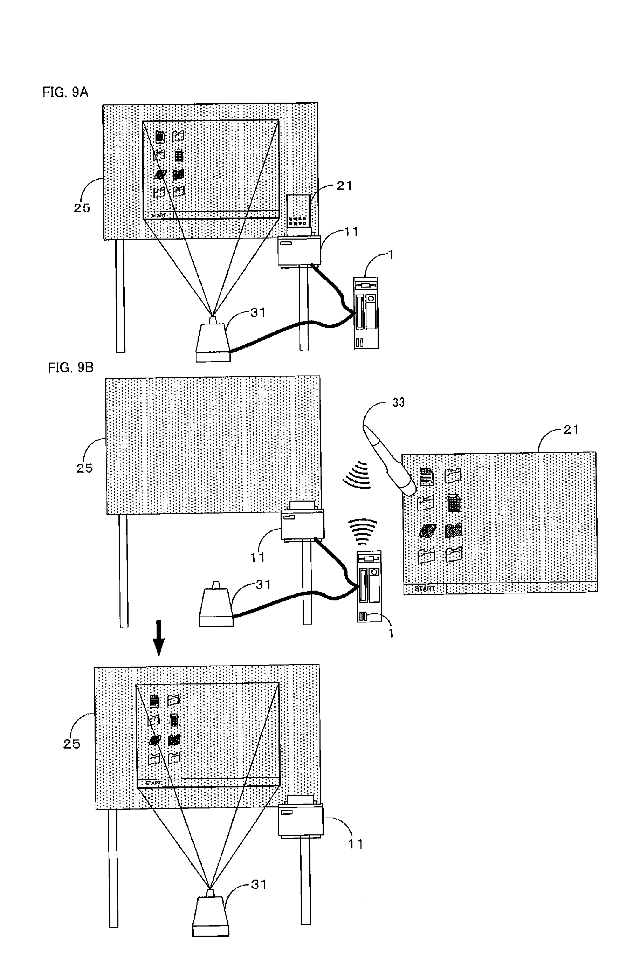

FIGS. 9A and 9B are diagrams illustrating a second embodiment.

The configuration shown in FIGS. 9A and 9B is basically the same as the one of FIGS. 3A and 3B. The overlapping descriptions are omitted for the same components, and only the portion different from FIGS. 3A and 3B will be described below.

In FIGS. 9A and 9B, the display unit, unlike the liquid crystal display of the illustration of FIGS. 3A and 3B, comprises a whiteboard 25 and a liquid crystal projector 31. Dot patterns are formed on the whiteboard 25 for recognizing a writing operation. A code value may be defined in these dot patterns if the whiteboard is required to be identified. It will be appreciated that if the whiteboard is only one sheet, the code value is not necessarily defined as the medium is not required to be identified.

Also, the information processing device 1 further comprises a recognition unit for recognizing a writing operation to the image display screen as writing image data. This recognition unit recognizes a writing operation to the whiteboard (tracing or touching the board) by a user using the pen type scanner 33 by changes of the coordinate values that are defined by the dot patterns read by the optical reading unit inside the pen type scanner 33.

It should be noted that, in the case of the illustration of FIGS. 3A and 3B, it is possible to provide the touch panel on the liquid crystal display, detect the user's writing operation, output the writing operation as an information signal to the recognition unit, and recognize the writing operation as writing image data.

If a capture operation is performed after the writing operation by a user, the recognized writing image data is stored in the storage unit with the screen shot and the execution environment of the information processing device 1.

Next, when a print operation is performed, the writing image, the dot pattern that defines the code value and/or coordinate values, and the screen shot are superimposedly printed by the print unit 11. It should be noted that the writing image may not be printed according to the user's desire.

Next, when the print medium 21 as shown in FIGS. 9A and 9B is touched by the pen type scanner, the execution environment when the capture operation is performed is restored based on the code value that is defined over the whole surface. Displaying of the writing image may also be performed by printing a paper keyboard for switching ON/OFF of display on the print medium 21 and touching the paper keyboard by the pen type scanner.

Thereafter, when a program of a corresponding icon is executed or a writing operation is performed again by touching the dot pattern on the white board or the dot pattern on the print medium with the pen type scanner, the updated content/image is stored again and printed.

It should be noted that, while the desktop image of the information processing device is displayed in the illustration of FIGS. 9A and 9B, if material that is used at educational institutions, including drawings, maps, and text books, and extracts thereof are displayed, learning efficiency can be expected to be improved with user friendly operations. If a user prints the time and date of everyday classes by writing operations on the print medium 21, and interfiles a plurality of such print media 21, the study content of certain time is displayed only by touching the print medium 21 at a later date, thereby facilitating reviewing of the study.

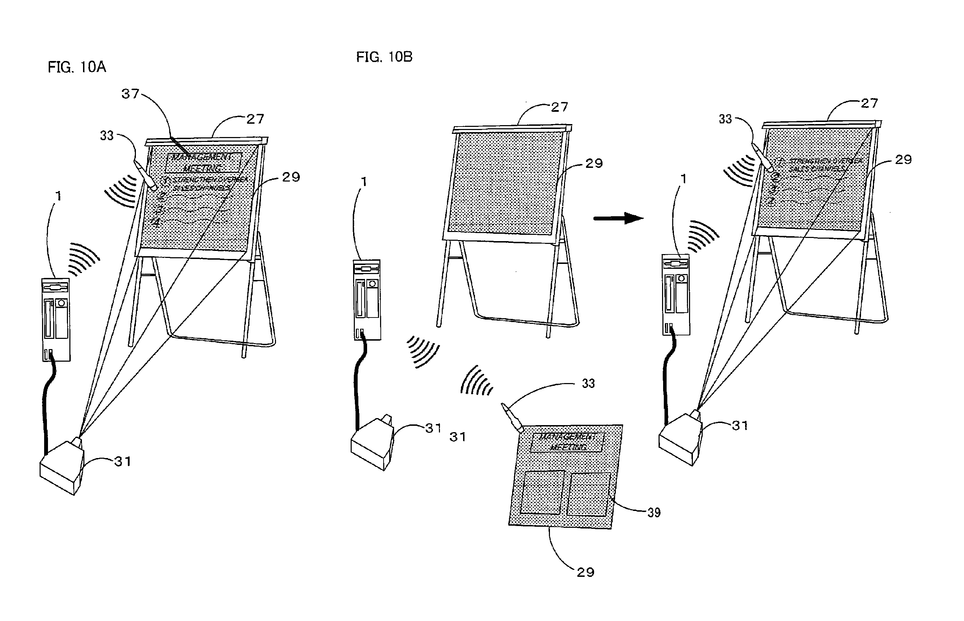

FIGS. 10A and 10B are diagrams illustrating a third embodiment.

The configuration shown in FIGS. 10A and 10B is basically the same as those of FIGS. 3A and 3B, and FIGS. 9A and 9B. The overlapping descriptions are omitted for the same components, and only the portion different from FIGS. 3A and 3B and FIGS. 9A and 9B will be described below.

In FIGS. 10A and 10B, the display unit, unlike the liquid crystal display of FIGS. 3A and 3B and the white board of FIGS. 9A and 9B, comprises a flip chart 27 and a liquid crystal projector 31. The flip chart 27 comprises a display portion with tens of layers of papers 29, and dot patterns are formed on the papers 29 for writing operations. These dot patterns, for example, define code values and coordinate values for identifying the papers 29.

Since this embodiment, which utilizes the flip chart 27, uses papers 29 on which dot patterns are printed in advance as a medium for writing operations and reading with the pen type scanner (as the print medium 21 of the illustration of FIGS. 3A and 3B), code values cannot be defined for respective icons as above embodiments. Thus, calibration illustrated in FIG. 8 is required to be performed before using.

FIG. 10A shows an example in which a text "Management Meeting" is written with a pencil 37, and texts "(1) Strengthen oversea sales channels," "(2)...," "(3)...," "(4)...," are written with the pen type scanner 33. For the portion where a writing operation is performed with the pen type scanner 33, the recognition unit of the information processing device 1 recognizes the writing operation by changes of the coordinate values of dot patterns that are continuously read by the writing operation, and the writing image data stored following the recognition is projected by the liquid crystal projector 31 to a paper 29 on the flip chart 27.

FIG. 10B schematically shows an operation flow for restoring the environment of FIG. 10A. A user removes the paper 29 that is written in FIG. 10A, and uses the paper 29 just like the print medium 21 of the illustration of FIGS. 3A and 3B. On the paper 29, only the writing by the pencil 37 remains, and the user can figure out when the paper 29 is used from the content of this writing. It will be appreciated that, even if the user forgets when the paper 29 is used, the content of that time can be restored by reading with the pen type scanner 33 since a code value is defined on the paper 29. Moreover, material 39 that is collected after the management meeting (such as a photograph) and the like can be attached to the paper 29.

Next, by touching the removed paper 29, a paper 29 that is now on the flip chart and on which dot patterns are formed and the screen shot can be superimposedly formed. This step corresponds to step S206 of the illustration of FIG. 2. After superimposedly forming the paper 29 and the screen shot, the paper 29 that is now on the flip chart can be used to perform a new writing operation and execute applications, and the removed paper 29 can be used as a pointing device to restore the former execution environment. For example, if an image that is displayed on the projection board that is formed superimposedly with dot patterns is touched, the dot pattern printed on the image display screen is read out, and, if the touched image is an icon, a program corresponding to the icon is executed.

With such a configuration, images that have been captured in a plurality of past dates and material and the like that are projected thereto can be easily switched only by a touch operation, and the above-described material 39 (a photograph and a graph) and the content written by the pencil 37 can be referred to by comparing them, thereby realizing both convenience as a paper medium and convenience as data.

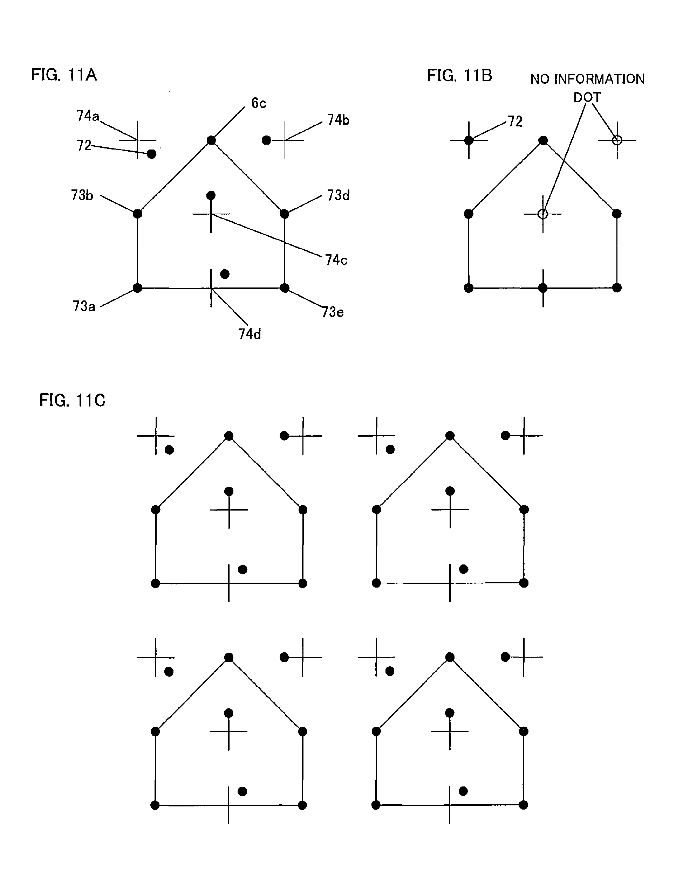

FIGS. 11A to 11C show examples of the dot pattern of the invention (GRID5). FIG. 11A shows positional relationships in a dot pattern among reference point dots 73a to 73e, virtual reference points 74a to 74d, and an information dot 72.

The dot pattern defines the direction of the dot pattern by the shape of a block. In GRID5, reference point dots 73a to 73e are first arranged. The line connecting the reference point dots 73a to 73e defines the shape that shows the orientation of the block (in this case, a pentagon pointing upward). Then, virtual reference points 74a to 74d are defined based on the arrangement of these reference point dots 73a to 73e. Then, vectors that have direction and length are defined with the virtual reference points 74a to 74d as the starting points. Finally, an information dot 72 is arranged at the end point of the vectors.

In this way, in GRID5, the orientation of the block can be defined by the way reference point dots 73a to 73e are arranged. The size of the whole block is also defined by defining the orientation of the block.

FIG. 11B shows an example of defining information based on whether or not there is an information dot 72 on the virtual reference points 74a to 74d of the block.

FIG. 11C shows that each two of the blocks of GRID5 are joined in vertical and horizontal directions respectively, provided, however, the direction in which blocks are joined is not limited to vertical and horizontal directions and the blocks may be joined in any direction.

It should be noted that, although, in FIGS. 11A to 11C, the reference point dots 73a to 73e and the information dot 72 are described as having the same shapes, the diameter of the reference point dots 73a to 73e may be different from the diameter of the information dot 72. The reference point dots 73a to 73e may be, for example, larger than the information dot 72. Also, these reference point dots 73a to 73e and information dot 72 may take any shapes, including a circle, a triangle, a rectangle, or other polygons, as long as the reference point dots 73a to 73e can be distinguishable from the information dot 72.

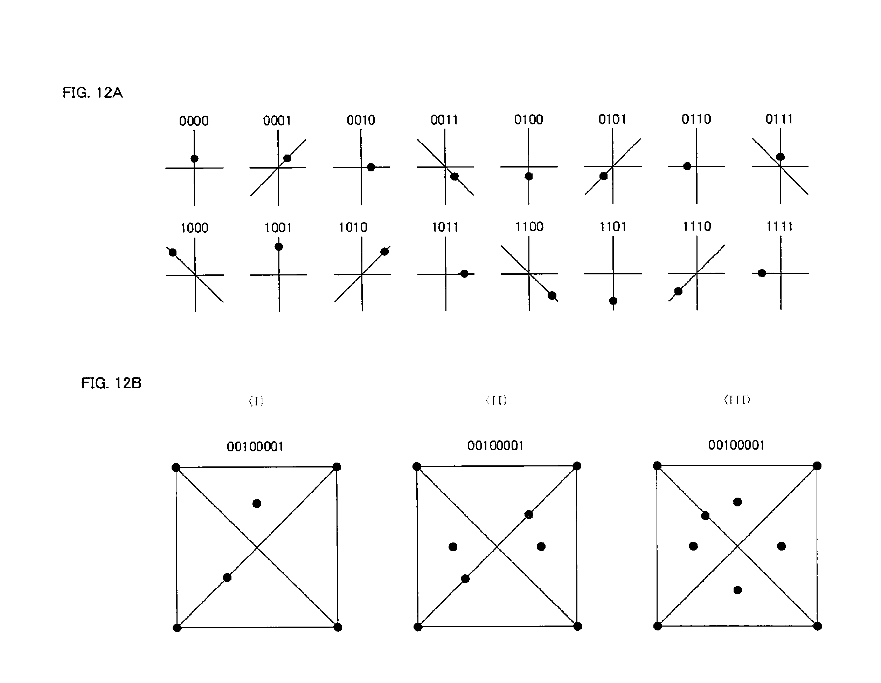

FIG. 12A is a diagram showing examples of the information dot and bit expression of data defined therein.

An information dot can express 4 bits, if using two types of information dots, long distance (upper row in FIG. 12A) and short distance (lower row in FIG. 12A) from a virtual reference point that is derived from the reference point dots and vector directions are eight directions. Here, the long distance one is preferably approximately 25 to 30% of the distance between adjacent virtual reference points and the short distance one is preferably approximately 15 to 20% thereof, provided, however, the gap between the centers of information dots of long distance and short distance is preferably longer than the diameter of these information dots.

The information dot is preferably one dot in consideration of visual quality. However, if the visual quality is disregarded and a large information amount is required, a large amount of information can be retained by allocating 1 bit to each vector and expressing the information with a plurality of information dots. For example, if eight concentric vectors are used, an information dot that is defined from the reference dot can express 2⁸ information, and a set of information dots of certain information can express 2⁶⁴.

FIGS. 12BI to 12BIII are examples of the information dot and bit expression of data defined therein. FIG. 12BI shows that two dots are arranged; FIG. 12BIII shows that five dots are arranged.

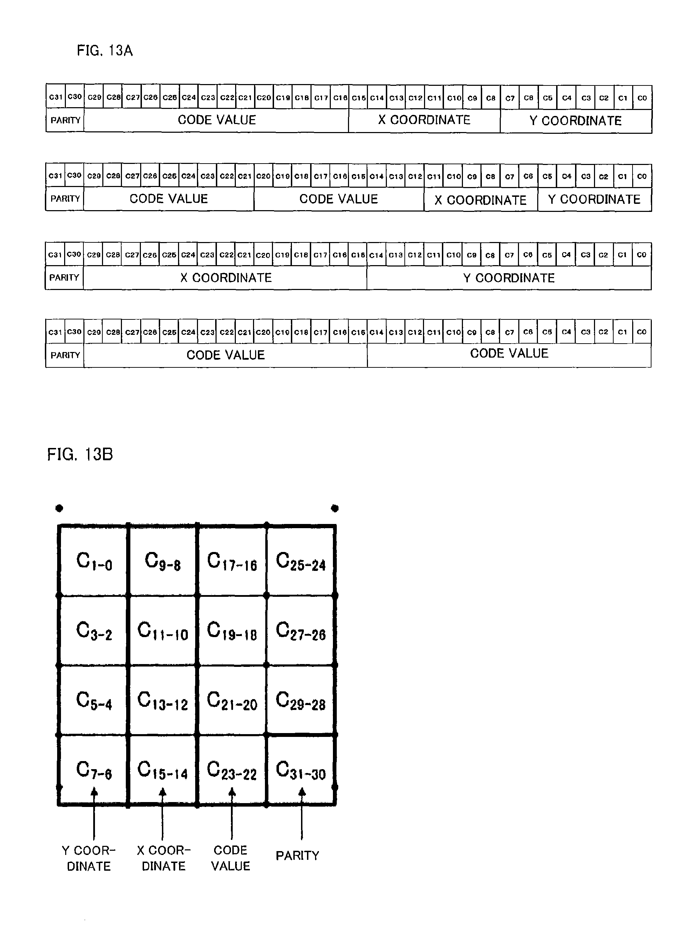

FIGS. 13A and 13B show relationships between code values and X and Y coordinate values of the dot pattern.

FIG. 13A shows values that are defined in 32 bits, C0 to C31, of the dot pattern in tables. As shown in FIG. 13A, C0 to C7 represents a Y coordinate, C8 to C15 represents an X coordinate, C16 to C29 represents a code value, and C30 to C31 represents parity.

These values are arranged in grid areas shown in FIG. 13B.

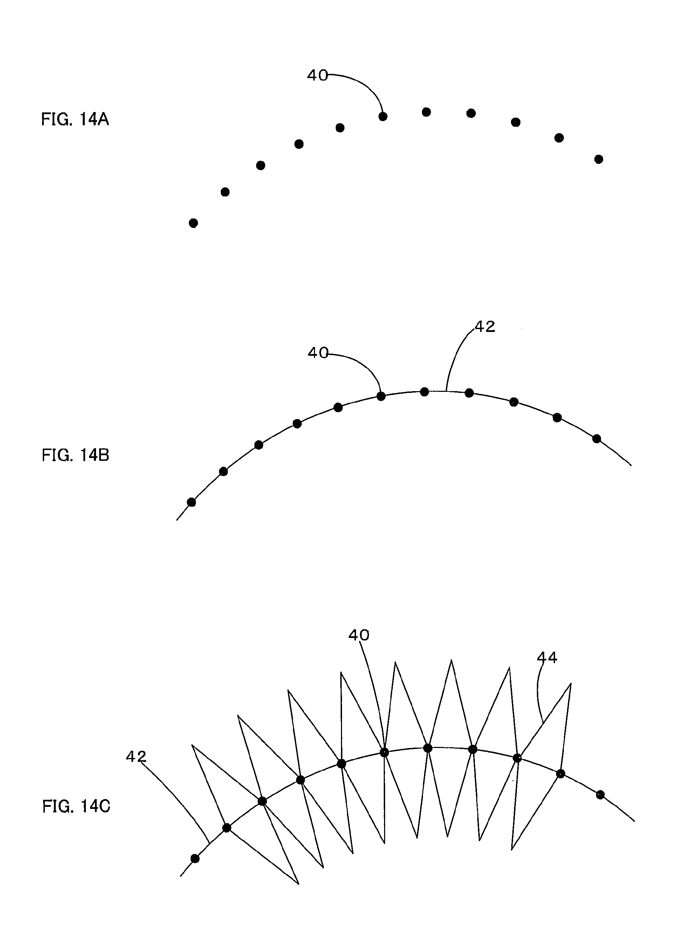

FIGS. 14A to 15B sequentially show an example of processes for forming an example of the dot pattern of the invention (a stream dot).

Unlike the above-described dot pattern (GRID5), as step 1, the dot pattern of the invention disposes a plurality of reference dots 40 continuously in a line at a position where information is desired to be input and output according to visual information on the medium surface (for example, a window or an icon).

While reference dots 40 are disposed in a curved line in FIG. 14A, the arrangement of the reference dots 40 is not limited to this, and can vary in many ways to form a dot pattern tailored to an area for inputting and outputting information, such as, combination of straight lines and curved lines and polygonal lines comprising a plurality of line segments.

Also, the reference dots 40 may be arranged on actual lines visibly formed on the medium surface, or the reference dots 4 may be arranged according to a predetermined rule along actual lines.

It should be noted that, while the reference dots 40 are preferably arranged at even intervals from a perspective of enhancing accuracy of reading, the arrangement is not limited to this, and a set of certain information of the dot pattern may be defined by combining a plurality of intervals, or both a set of certain information of the dot pattern and the direction of the dot pattern may be defined using three different arrangement intervals of reference dots within the set of certain information.

Next, as step 2, a first virtual reference line 42 that connects the reference dots 40 that are arranged in a line is provided. While the first virtual reference line 42 is provided as a curved line in FIG. 14B, the first virtual reference line 42 is not limited to this, and the first virtual reference line 42 of a straight line may be provided for the reference dots 40 arranged in a curved line, or the first virtual reference line 42 of a curved line may be provided for the reference dots 40 arranged in a straight line. That is, depending on where to arrange the second virtual reference line 44, virtual reference point 74, and information dot 72 in the following steps 3 to 5, the first virtual reference line 42 comprising a straight line, a polygonal line, and/or a curved line that connects the reference dots can be flexibly defined.

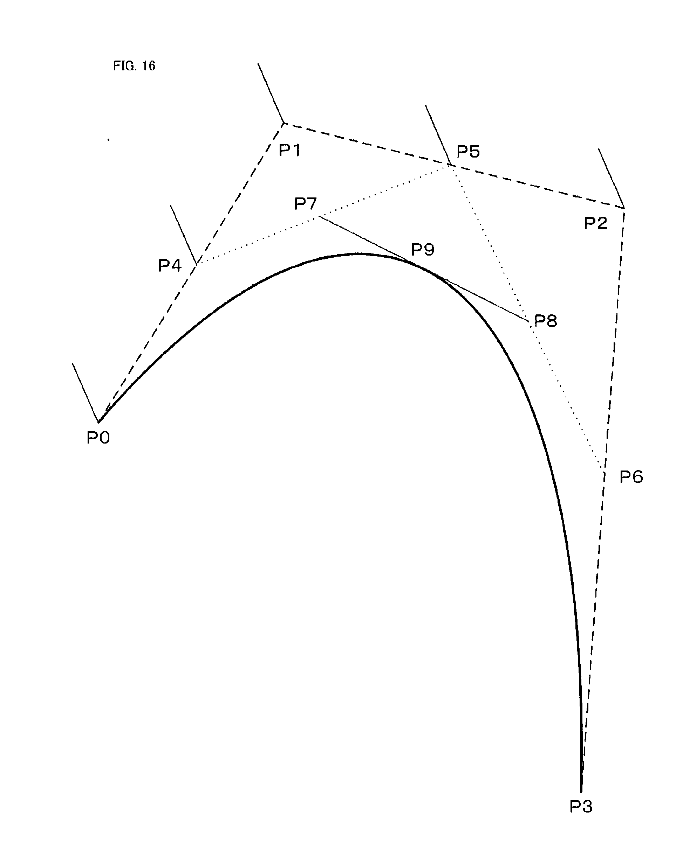

It should be noted that, as shown in the example of FIG. 16, if the first virtual reference line 42 is a curved line, the curved line is preferably a Bezier curve.

That is, first, reference dots on the first virtual reference line are defined as P0 and P3, and P1 and P2 are defined as given control points. Next, points, P4, P5, and P6, that divide three line segments obtained by sequentially connecting the control points, P0-P1, P1-P2, and P2-P3, in a ratio of 1 to 1 are calculated. Then, points P7 and P8 that divide two line segments obtained by sequentially connecting above points, P4-P5 and P5-P6, in a ratio of 1 to 1 are calculated.

Finally, a point P9 that further divides a line segment P7-P8 that connects the points P7 and P8 in a ratio of 1 to 1 is calculated, and this point becomes a point on a Bezier curve.

By repeatedly performing this procedure, a Bezier curve with control points P0, P1, P2, and P3 can be obtained.

It should be noted that, without limiting to a Bezier curve, the first virtual reference line may be provided using a variety of algorithms such as a spline curve obtained by utilizing a spline function, an nth-order polynomial, an elliptic arc, and the like.

Also, a curved line can be defined for a second virtual reference line that will be described later herein using the same method as the first virtual reference line.

Next, as step 3, a second virtual reference line 44 that is defined at a predetermined position from the reference dots 40 arranged in a line and/or the first virtual reference line 42 is provided. In FIG. 14C, the second virtual reference line 44 is provided with arbitrary angle from neighboring reference dots 40 toward a predetermined point on a vertical line to a tangent line of the first virtual reference line 42 at a middle point between the neighboring reference dots 40. However, the second virtual reference line 44 is not limited to this and can be defined by a variety of ways to provide virtual reference points tailored to an area where information is desirably input and output by the dot pattern as described later.

Also, the second virtual reference line 44 may be provided only on one side of the first virtual reference line 42 to define the direction of the dot pattern, or the second virtual reference lines 44 may be provided on both sides thereof to increase the information amount.

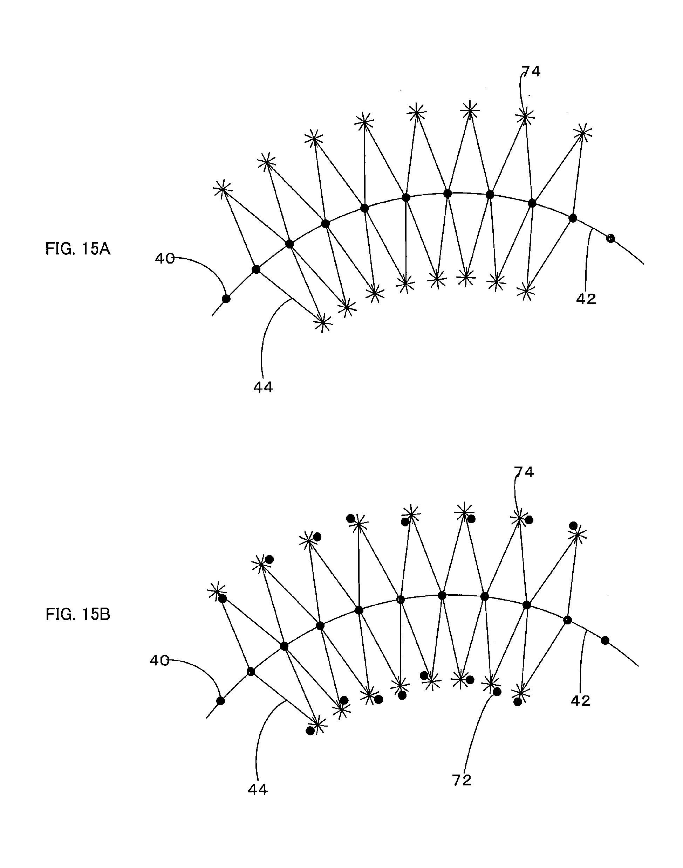

Next, as step 4, a plurality of virtual reference points 74 are provided at predetermined positions on the second virtual reference line 44. In FIG. 15A, a virtual reference point 74 is provided at an intersection of the second virtual reference lines 44, that is, at a vertex of an isosceles triangle with a straight line that connects neighboring reference dots 40 as a base and the second virtual reference lines 44 as opposing sides. However, the position of the virtual reference point 74 is not limited to this, and can vary in many ways such as providing at a midpoint of the second virtual reference line 44 or on a reference dot 40 instead of on the second virtual reference line 44.

Then, as step 5, an information dot 72 is arranged at the end point of a vector expressed with a virtual reference point 74 as the start point. In FIG. 15B, vector directions from a virtual reference point 74 are eight directions and an information dot 72 is arranged for one virtual reference point 74 to make a distance from the virtual reference point 74 an equal distance. However, the arrangement of the information dot 72 is not limited to this, and a plurality of information dots 72 can be arranged in an arbitrary direction and arbitrary length, such as arranging an information dot 72 on a virtual reference point 74, arranging with 16 vector directions, or, arranging two information dots 72 for one virtual reference point 74.

In this way, the stream dot pattern of the invention is formed on the basis of reference dots that are continuously arranged in a line including a curved line, instead of reference dots that are formed in a grid form in conventional dot patterns.

Therefore, without limiting to the shape of a rectangular area when forming a dot pattern as a two-dimensional code, the dot pattern can be formed in a flexible shape tailored to an information area visibly formed on a medium surface.

It should be noted that the virtual reference lines and virtual reference points of the invention are not actually formed by printing on a medium surface, and are only virtually set when arranging a dot pattern on the image memory of a computer or when reading a dot pattern.

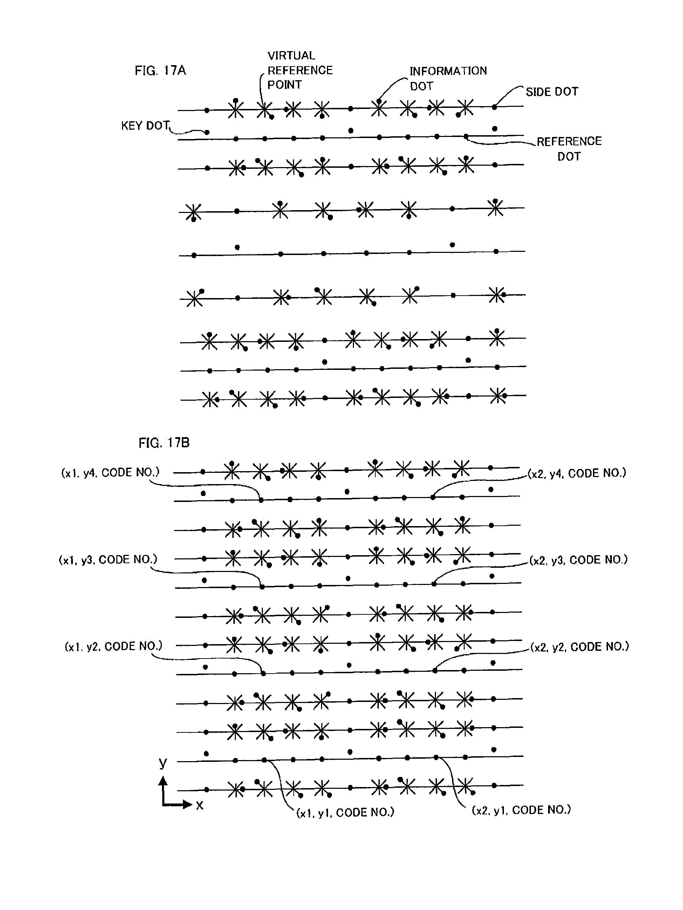

FIGS. 17A and 17B are diagrams showing an example of a state in which stream dot patterns are arranged in an up-to-down direction.

In FIGS. 17A and 17B, key dots and side dots are arranged in addition to the reference dots and information dots. The key dot is a dot arranged at both ends of a set of certain information. This key dot is a representative point of one area of a dot pattern 1 that represents a set of information dots. The side dot is a dot arranged on a positive and negative extension line extending from displacement of the key dot 2.

In FIG. 17B, reference dots and stream dot patterns are arranged at even intervals. In this way, X and Y coordinate values are tightly arranged and defined in the writing area by forming a plurality of stream dot patterns in which intervals of reference points are constant. However, the stream dot pattern of the invention is not limited to this, and, as shown in FIG. 17A, the intervals of the dot patterns may be arbitrarily set. Also, the intervals of the reference dots can be arbitrarily set.

In this way, without limiting to the shape of a rectangular area when forming a dot pattern that defines X and Y coordinates as a two-dimensional code (using as an index), the dot pattern can be formed by repeating a set of certain information in a flexible shape tailored to an information area visibly formed on a medium surface.

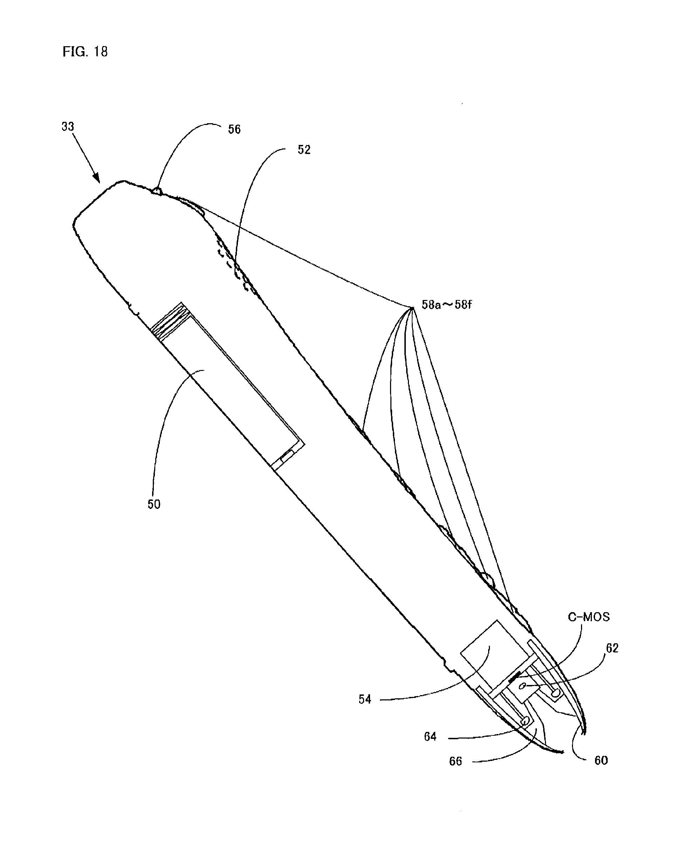

FIG. 18 is a diagram schematically showing an example of the configuration of the pen type scanner 33.

The pen type scanner 33 incorporates a battery 50, a speaker 52, and a PCB (Printed-Circuit Board) 54. The central processing unit (CPU) and a memory are assembled and mounted on the PCB 54. Also, a microphone 56 for inputting audio data is incorporated at the rear end of the pen type scanner 33 (the upper left portion in FIG. 18). While not shown in FIG. 18, a memory cartridge may also be detachably attached. The memory cartridge can be replaced with a ROM cartridge, a micro unit cartridge, and the like.

Buttons 58a to 58f are provided on the surface of the pen type scanner 33, and can be used to determine at steps S202, S205, S208, and S211. Even though buttons with different functions are not provided, the buttons 58a to 58f can have such functions according to predetermined operation methods (e.g., touching, sliding, long-pressing).

Also, a C-MOS (Complementary Metal Oxide Semiconductor) camera unit and a tapered nose 60 are provided at the leading end of the pen type scanner 33 (the lower right portion in FIG. 18), along the vertical axis of the medium surface when the pen type scanner 33 abuts the medium surface by inclining approximately 45 degrees. A lens 62 of the C-MOS camera unit is attached in the inner space of the nose 60 in a manner that the lens 62 faces the space so that the window portion at the leading end of the nose 60 can be imaged.

An IRLED (Infrared Light-Emitting Diode) 64 is equipped in the inner space of the nose 60 so that the irradiation light from IRLED 64 enters a diffuser 66. The elements of the irradiation light diffused by the wall surface of the diffuser 66 (optical elements of larger degree than 45 degrees with relation to the optical axis) are emitted outside through the wall surface of the diffuser 66. Then, the straight elements of the irradiation light (optical elements of smaller degree than 45 degrees with relation to the optical axis) are reflected off the wall surface of the diffuser 66 and proceed inside the tube. Only the elements of the irradiation light that are generally parallel to the optical axis inside the diffuser 66 are irradiated to the opening portion of the nose 60 from the leading end surface.

In this way, as the irradiation light becomes a converging light that is parallel to the optical axis by passing through the meander-line diffuser 66 that is made of transparent resin, an even light volume can be provided to the entire area of the opening portion of the nose 60. According to this embodiment, for there is no dark part in the surrounding portion as the one that is generated when diffused light is used, accuracy of reading the dot pattern portion can be enhanced.

### Description of Reference Numerals

| | |
|---|---|
| 1 | INFORMATION PROCESSING DEVICE |
| 3 | CONTROL UNIT |
| 5 | STORAGE UNIT |
| 7 | RECOGNITION UNIT |
| 9 | DISPLAY UNIT |
| 11 | PRINT UNIT |
| 13 | OPTICAL READING UNIT |
| 19 | LIQUID CRYSTAL DISPLAY |
| 21 | PRINT MEDIUM |
| 23 | DOT PATTERN |
| 25 | WHITEBOARD |
| 27 | FLIP CHART |
| 29 | PAPER |
| 31 | PROJECTOR |
| 33 | PEN TYPE SCANNER |
| 35 | CALIBRATION MARK |
| 37 | PENCIL |
| 39 | MATERIAL |
| 40 | REFERENCE DOT |
| 42 | FIRST VIRTUAL REFERENCE LINE |
| 44 | SECOND VIRTUAL REFERENCE LINE |
| 50 | BATTERY |
| 52 | SPEAKER |
| 54 | PCB |
| 56 | MICROPHONE |
| 58 | BUTTON |
| 60 | NOSE |
| 62 | LENS |
| 64 | IRLED |
| 66 | DIFFUSER |
| 72 | INFORMATION DOT |
| 73 | REFERENCE POINT DOT |
| 74 | VIRTUAL REFERENCE POINT |

## Claims

1. A program that is executed in an information processing device, causing a control unit of the information processing device to execute steps of:
storing an image that is displayed on a display unit connected with the information processing device in a storage unit of the information processing device, as well as, storing an execution environment of the information processing device at a moment of storing the image, in the storage unit;
forming superimposedly a dot pattern, that defines a code value that at least includes identification information identifying the execution environment and coordinate values corresponding to the image, and the image;
acquiring the code value and coordinate values from an optical reading unit that read the dot pattern and is connected with the information processing device; and
restoring the execution environment corresponding to the code value and coordinate values by identifying the execution environment based on the identification information that is defined in at least part of the acquired code value.

2. The program according to Claim 1, wherein
the image displayed on the display unit is one or a plurality of software execution images that can accept a pointing operation,
the execution environment includes an execution state of the software, and
the restoring step is a step that replaces an image displayed on the display unit at a moment when the optical reading unit read the dot pattern and restores the execution environment based on the acquired identification information as the software execution image corresponding to the code value and the coordinate values.

3. The program according to Claim 1, wherein
the image displayed on the display unit is a desktop image,
the execution environment includes arrangement information of an icon on the desktop image, and
the restoring step is a step that replaces an icon arrangement of a desktop displayed on the display unit at a moment when the optical reading unit read the dot pattern and restores the execution environment based on the acquired identification information by making the icon arrangement same as an icon arrangement of the desktop image corresponding to the code value and the coordinate values.

4. The program according to Claim 1, wherein
an image display screen of the display unit can be written in,
the storing step further includes a step of storing writing image data that is obtained by recognizing a writing operation to the image display screen by a recognition unit that is further provided in the information processing device, in the storage unit,
the forming step is a step that forms the writing image by superimposing the dot pattern, that defines the code value and coordinate values, and the image, and
the restoring step is a step that restores the execution environment based on the acquired identification information, and displays the writing image data corresponding to the code value and coordinate values on the display unit.

5. The program according to Claim 4, wherein
a dot pattern that defines coordinate values is formed on the image display screen, and
the recognition unit recognizes a writing operation to the image display screen by the optical reading unit as the writing image data, based on the coordinate values defined by the dot pattern read by the optical reading unit.

6. The program according to Claim 1, wherein
the image displayed on the display unit is a desktop image, the code value includes association with an icon on the desktop image,
the execution environment includes execution information of a program corresponding to an icon on the desktop image, and
the restoring step is a step that restores the execution environment based on the acquired identification information, and executes a program corresponding to the icon corresponding to the code value defined by the dot pattern.

7. The program according to Claim 3, wherein
the execution environment further includes execution information of a program corresponding to an icon on a desktop image, and
the restoring step, in addition to the step of making the same arrangement, further includes steps of:
restoring the execution environment based on the acquired identification information;
converting coordinate values defined by the dot pattern to coordinate values on the display unit;
moving a cursor displayed on the display unit to a location of the coordinate values on the display unit; and
executing a program corresponding to an icon located at the coordinate values of the moved cursor.

8. The program according to Claim 1, wherein
the image displayed on the display unit is an execution image of software that accepts input,
the execution environment includes an execution state of the software and hierarchical information that is input by a user until reaching the execution state, and
the restoring step is a step that restores the execution environment based on the acquired identification information, converts coordinate values defined by the dot pattern to coordinate values of the display unit, and executes software located at the coordinate values on the display unit based on the hierarchical information corresponding to the code value.

9. The program according to Claim 1, wherein
the forming step is a step that superimposedly prints a dot pattern that defines the code value and coordinate values and the image on a medium.

10. An information processing device that can restore a former state from an execution environment and allow a user to utilize a former operation, wherein
the information processing device at least has a storage unit and a control unit, and
the control unit:
stores an image that is displayed on a display unit connected with the information processing device in the storage unit, as well as, stores the execution environment of the information processing device at a moment of storing the image, in the storage unit;
superimposedly forms a dot pattern, that defines a code value that at least includes identification information for identifying the execution environment and coordinate values corresponding to the image, and the image;
acquires the code value and coordinate values from the optical reading unit that read the dot pattern and is connected with the information processing device;
identifies the execution environment based on the identification information defined in at least part of the acquired code value; and
restores the execution environment corresponding to the code value and coordinate values.

11. An information processing system comprising: an information processing device that can restore a former state from an execution environment and allow a user to utilize a former operation; and a display unit and an optical reading unit that are connected with the information processing device, wherein
the information processing device at least has a storage unit and a control unit; and
the control unit:
stores an image displayed on the display unit in the storage unit, as well as, stores the execution environment of the information processing device at a moment of storing the image, in the storage unit;
superimposedly forms a dot pattern, that defines a code value that at least includes identification information for identifying the execution environment and coordinate values corresponding to the image, and the image;
acquires the code value and coordinate values from the optical reading unit that read the dot pattern;
identifies the execution environment based on the identification information defined in at least part of the acquired code value; and
restores the execution environment corresponding to the code value and coordinate values.

12. The information processing system according to Claim 11, wherein the control unit further includes processing of:
at least temporarily displaying calibration marks at two or more corners and/or a center of the display unit;
when the optical reading unit reads a location that matches the calibration mark on a medium on which the dot pattern that defines the code value and coordinate values and the image are superimposedly formed, converting coordinate values defined by the dot pattern at the read location to coordinate values of a location where the calibration mark on the display unit is displayed;
by performing this processing to all the calibration marks displayed on the display unit, acquiring a coordinate conversion function or a coordinate conversion table that converts coordinate values of the dot pattern to coordinate values of the display unit; and,
afterwards, restoring the corresponding execution environment by converting coordinate values of the dot pattern read by the optical reading unit to coordinate values on the display unit using the coordinate conversion function or coordinate conversion table.

13. The information processing system according to Claim 11, wherein
the display unit comprises a projector and a projection board,
a dot pattern that defines a code value and coordinate values is formed on the projection board,
the dot pattern that defines the code value and coordinate values and the image are superimposedly formed by projecting the image on the projection board, and
the control unit identifies the projection board based on the code value.

14. The information processing system according to Claim 13, wherein the projection board is a white board.

15. The information processing system according to Claim 13, wherein the projection board is a flip chart.

16. The program according any one of Claims 1 to 9, the information processing device according to Claim 10, or the information processing system according to any one of Claims 11 to 15, wherein the dot pattern is formed by arranging a plurality of stream dot patterns
arrayed in accordance with steps of:
disposing a plurality of reference dots sequentially in a line in accordance with a predetermined rule;
providing a first virtual reference line that comprises a straight line, a polygonal line and/or a curved line that connects the plurality of reference dots;
providing at least one second virtual reference line that is defined at a predetermined position from the reference dots and/or the first virtual reference line and comprises a straight line and/or a curved line;
providing a plurality of virtual reference points at predetermined positions on the second virtual reference line; and
disposing an information dot that defines X and Y coordinate values and/or a code value by a distance and a direction from the virtual reference point, at an end point of a vector expressed with the virtual reference point as a start point.

17. The program, the information processing device, or the information processing system according to Claim 16, wherein,
in the stream dot, a reference dot is further provided at a predetermined position, which is a further reference for defining the second virtual reference line and/or defining a direction of the dot pattern and a set of X and Y coordinate values and/or a code value.
